# EUROPÄISCHE PATENTSCHRIFT

(11) **EP 0 854 100 B1**
(45) Veröffentlichungstag und Bekanntmachung des Hinweises auf die Patenterteilung: **07.03.2001**
(21) Anmeldenummer: 97120035.7
(22) Anmeldetag: 15.11.1997
(51) Int. Cl.: B65G 1/00, B65G 1/14

(54) **Stapelsäule zum Lagern von Lagergütern**
Stacking column for storing products
Colonne de stockage pour marchandises

(30) Priorität: 18.11.1996 DE 19647578
(43) Veröffentlichungstag der Anmeldung: 22.07.1998
(73) Patentinhaber: MTS Maschinenbau GmbH, 88512 Mengen (DE)
(72) Erfinder: Schöller, Heinz, 78239 Rielasingen-Worblingen (DE); Strobel, Gustav, 88348 Saulgau (DE)
(74) Vertreter: Weiss, Peter, Dr.

(56) Entgegenhaltungen:
- EP-A- 0 192 613
- EP-A- 0 510 405
- EP-A- 0 562 417
- DE-A- 3 619 688
- DE-A- 3 811 310
- DE-A- 4 020 864
- DE-A- 4 133 464
- DE-U- 9 318 410

## Beschreibung

Die Erfindung betrifft eine Stapelsäule zum Lagern von Lagergütern, insbesondere von Karosserieteilen auf Tragarmen von Klinkenhebeln, die um eine Drehachse von einer Ruhestellung in eine Arbeitsstellung drehen, wobei mehrere Klinkenhebel übereinander oder nebeneinander angeordnet sind und in Wirkverbindung stehen.

Derartige Stapelsäulen sind in vielfältiger Form und Ausführung bekannt. Meist handelt es sich um senkrechte Stapelsäulen, die in einem Viereck angeordnet sind. Derartige Stapelsäulen sind bspw. in der DE-PS 35 36 251 oder auch in der DE-OS 38 11 310 gezeigt.

Aus gewissen Gründen kann es sich auch als ratsam erweisen, diese Stapelsäulen schräg anzuordnen, wie dies in der DE-OS 41 33 464 gezeigt ist. Ferner besteht auch die Möglichkeit der horizontalen Anordnung der Stapelsäulen nach der DE-OS 40 20 864.

Bevorzugt werden diese Stapelsäulen noch von einem Schutzprofil umgeben, wie es näher in der EP-A-93 10 42 23 beschrieben ist.

Bei all diesen Stapelsäulen ruht das Lagergut in oder an den Tragarmen der Klinkenhebel, wobei die Gefahr besteht, dass das Lagergut verschoben wird. Insbesondere wenn die Stapelsäulen transportierbar ausgebildet sind, wirkt sich dieser Nachteil erheblich ungünstig aus. Durch das Verschieben auf den Tragarmen kann es zudem zu Beschädigungen des Lagergutes kommen. Deshalb wird heute dazu übergegangen, das Lagergut auch in den Stapelsäulen zusätzlich zu sichern. Bislang werden hierbei alle möglichen komplizierten Klammern und sonstigen Halterungen verwendet, die einen erheblichen zusätzlichen Aufwand bedeuten.

Der Erfindung liegt die Aufgabe zugrunde, eine Stapelsäule der o.g. Art zu entwickeln, bei der die Lagergüter bereits beim normalen Einlagern in die Stapelsäule gesichert gehalten werden.

Zur Lösung dieser Aufgabe führt, dass zwischen zwei benachbarten Klinkenhebeln eine Zwischenklinke vorgesehen ist, welche nach einem Auf- oder Anlegen des Lagergutes auf oder an dem einen Klinkenheben durch die Schwenkbewegung des anderen Klinkenhebels auf oder an das Lagergut andererseits des einen Klinkenhebels auf- oder anlegbar ist.

Bei einigen der bekannten Stapelsäulen erfolgt die Bewegung der Klinkenhebel in Abhängigkeit voneinander. Meist gelangen die Klinkenhebel von einer Ruhestellung in eine Bereitschaftsstellung und von dort in eine Arbeitsstellung. Wird jeweils ein Klinkenhebel in eine Arbeitsstellung geschwenkt, d.h., wird auf ihn ein Lagergut aufgelegt, so bringt er den nachfolgenden Klinkenhebel in eine Bereitschaftsstellung.

Wird dann auf diesen sich in Bereitschaftsstellung befindlichen Klinkenhebel ein Lagergut aufgelegt, so schwenkt dieser den nachfolgenden Klinkenhebel in die Bereitschaftsstellung. Im vorliegenden Ausführungsbeispiel geschieht dies durch das Zusammenwirken einer oberen Steuerkante eines Steuerarms des Klinkenhebels, auf dem ein Bolzen des nachfolgenden Klinkenhebels gleitet. Wird die Steuerkante des Klinkenhebels, der sich in Bereitschaftsstellung befindet, in Arbeitsstellung geschwenkt, so ist sie so ausgestaltet, dass der Bolzen des nachfolgenden Klinkenhebels an ihr entlanggleitet und damit den nachfolgenden Klinkenhebel in Bereitschaftsstellung bringt.

Die vorliegende Erfindung macht sich nun den Grundgedanken des Zusammenwirkens der Klinkenhebel auch für die Zwischenklinken zunutze. Die Schwenkbewegung der Zwischenklinken ist so abgestimmt, dass sie in einem gewünschten Ausmass der Schwenkbewegung der Klinkenhebel folgt. Dies bedeutet, dass eine Zwischenklinke noch in Ruhestellung sein sollte, wenn sich der ihr zugeordnete Klinkenhebel bereits in Bereitschaftsstellung befindet. Ferner sollte sich die Zwischenklinke noch in Bereitschaftsstellung befinden, wenn der ihr zugeordnete Klinkenhebel bereits in Arbeitsstellung ist. Erst wenn der nachfolgende Klinkenhebel in Arbeitsstellung gelangt, soll in einem bevorzugten Ausführungsbeispiel die Zwischenklinke geschlossen, d.h., dem Lagergut auf- bzw. angelegt werden.

Die Zwischenklinke sollte somit ebenfalls drehbar an der Stapelsäule angeordnet sein, wobei sie in einem bevorzugten Ausführungsbeispiel die Drehachse des Klinkenhebels ebenfalls mitbenutzt. Hierdurch ist eine günstige Koordination der Drehbewegungen möglich.

Wie die Zwischenklinke ausgestaltet ist, hängt, wie auch schon beim Tragarm bzw. dem Klinkenhebel, von dem zu lagernden Gut ab. Meist dürfte sie jedoch streifenförmig ausgestaltet sein, so dass sie beidseits der Drehachse je ein Ende aufweist. Mit dem einen Ende drückt die Zwischenklinke auf das Lagergut, das andere Ende ist bevorzugt gelenkig über einen Verbindungsstreifen mit dem Steuerarm des nachfolgenden Klinkenhebels verbunden. Hierbei genügt es, wenn das Ende der Zwischenklinke einen Haken od.dgl. aufweist, mit dem die Zwischenklinke in eine Ausnehmung des Verbindungsstreifens eingehängt ist.

Andererseits der Ausnehmung besitzt der Verbindungsstreifen eine weitere Ausnehmung, die bevorzugt als Langloch ausgestaltet ist. In dieses Langloch greift ein Bolzen des Steuerarms des nachfolgenden Klinkenhebels ein, so daß bei dessen Drehung auch die Zwischenklinke bewegt wird.

Bevorzugt wird als Bolzen für die Verbindung mit dem Verbindungsstreifen der oben erwähnte Bolzen benutzt, über den bereits der Klinkenhebel von einer Ruhestellung in eine Breitschaftsstellung gebracht wird. Hierdurch werden die Einzelteile, welche die Bewegung von Klinkenhebel und Zwischenklinke ermöglichen, auf ein Minimum reduziert.

Der Verbindungstreifen ist im übrigen an dem Bolzen so befestigt, daß der Bolzen in dem oben erwähnten Langloch gleiten kann. Hierzu bieten sich entsprechende Sicherungsringe an, die als Sprengringe in Nuten des Bolzens aufgenommen werden.

Bevorzugte Ausführungsbeispieles der Erfindung ergeben sich aus der nachfolgenden Beschreibung sowie der Zeichnung; diese zeigt in
Figur 1 einen Ausschnitt aus einer geöffneten Stapelsäule;
Figur 2 eine Seitenansicht eines Klinkenhebels zum Halten von Lagergütern;
Figur 3 eine Stirnansicht des Klinkenhebels gemäss Figur 2;
Figur 4 eine Draufsicht auf einen Verbindungsstreifen;
Figur 5 eine Seitenansicht einer erfindungsgemässen Zwischenklinke;
Figur 6 eine Draufsicht auf die Zwischenklinke gemäss Figur 5 vor dem Abkanten eines Hakens;
Figur 7 eine Stirnansicht der Zwischenklinke gemäss Figur 5 und 6.

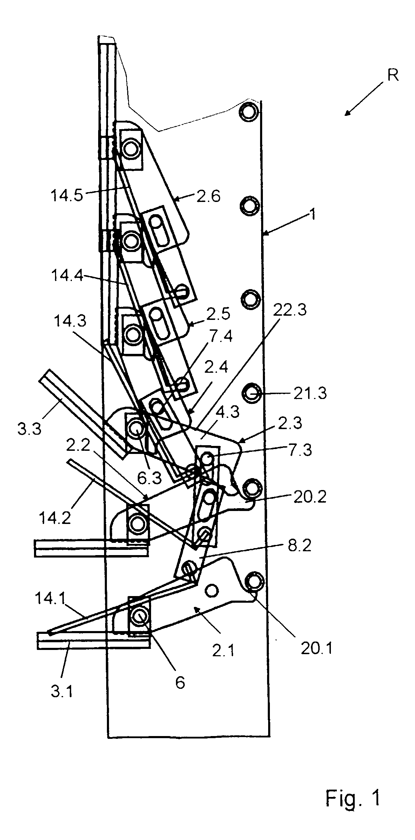

Eine Stapelsäule R weist zwei Säulenstreifen auf, die voneinander beabstandet parallel zueinander verlaufen. In Figur 1 ist nur der hintere Säulenstreifen 1 gezeigt, der vordere Säulenstreifen ist entfernt.

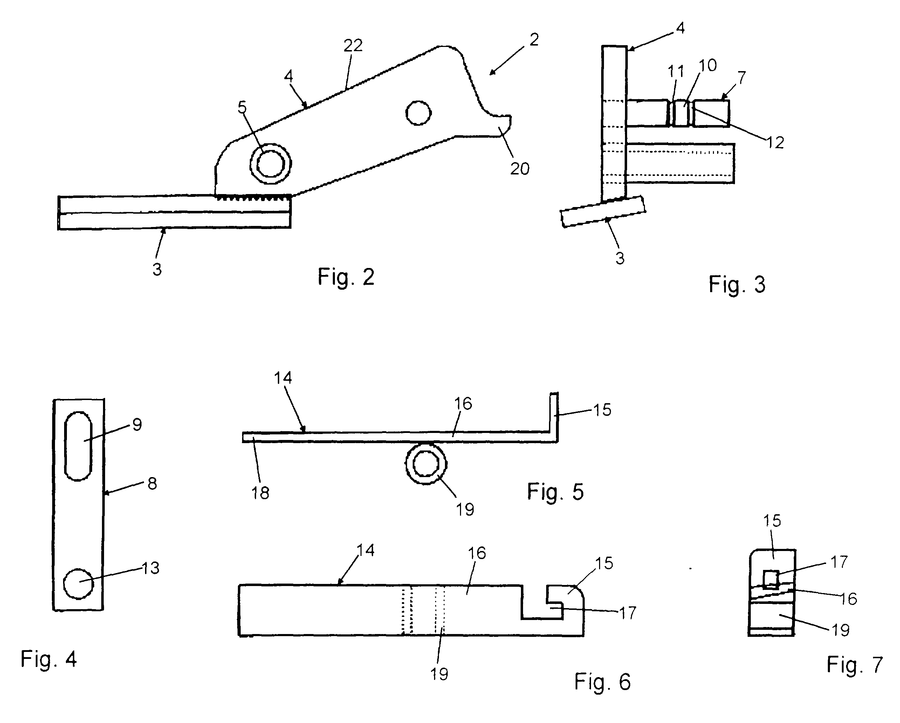

Zwischen den beiden Säulenstreifen lagern Klinkenhebel 2.1 bis 2.6, wobei ein Klinkenhebel 2 in den Figuren 2 und 3 näher dargestellt ist. Jeder Klinkenhebel 2 besitzt einen Tragarm 3 und einen Steuerarm 4. Im vorliegenden Ausführungsbeispiel ist der Tragarm 3 gegenüber dem Steuerarm 4 schräg angeordnet, es sind jedoch auch andere Ausgestaltungen des Tragarmes 3 denkbar, die den Anfordernissen des zu lagernden Lagergutes entsprechen.

Am Steuerarm 4 befindet sich nahe dem Tragarm 3 eine Hülse 5, durch die in Gebrauchslage gemäss Figur 1 eine Drehachse 6 gesteckt wird. Der gesamte Klinkenhebel 2 dreht um diese Drehachse 6.

Jenseits der Hülse 5 ist an dem Steuerarm 4 ein Bolzen 7 vorgesehen, welcher zwei nachfolgend beschriebene Funktionen hat. In einer Funktion dient der Bolzen 7 zum Halten eines in Figur 4 gezeigten Verbindungsstreifens 8, wobei der Bolzen 7 ein Langloch 9 in dem Verbindungsstreifen 8 durchsetzt. In Gebrauchslage befindet sich das Langloch 9 bzw. der Verbindungsstreifen 8 auf einem Mittelstück 10 des Bolzens 7 zwischen zwei Ringnuten 11 und 12 und wird auf diesem Mittelstück 10 durch nicht näher gezeigte Sprengringe gehalten, die in den Ringnuten 11 und 12 lagern.

Der Verbindungsstreifen 8 besitzt andererseits des Langloches 9 eine weitere Ausnehmung 13, in die eine Zwischenklinke 14, die in den Figuren 5 bis 7 dargestellt ist, eingehängt werden kann. Hierzu ist der Zwischenklinke 14 ein Haken 15 angeformt, der in Figur 6 noch in einer Ebene mit einem Klinkenstreifen 16 liegt, in Figur 5 jedoch bereits aufgerichtet ist. Dieser Haken 15 bildet eine U-förmige Hakenöffnung 17 aus, in die der Verbindungsstreifen 8 eingehängt wird, wobei der Haken 15 durch die Ausnehmung 16 greift.

Zwischen dem Haken 15 und einem Druckende 18 ist unter dem Klinkenstreifen 16 eine weitere Hülse 19 angeordnet, welche ebenfalls auf die Drehachse 6 gesteckt wird. Somit kann auch die Zwischenklinke 14 um diese Drehachse 6 drehen.

Die Funktionsweise der vorliegenden Erfindung ist folgende:

Gemäss Figur 1 befindet sich der Klinkenhebel 2.1 in Arbeitsstellung, wobei auch bereits die ihm zugeordnete Zwischenklinke 14.1 geschlossen ist.

Der darüber angeordnete Klinkenhebel 2.2 befindet sich ebenfalls in Arbeitsstellung, jedoch ist die ihm zugeordnete Zwischenklinke 14.2 noch geöffnet, d.h., in Bereitschaftsstellung.

Der darüber angeordnete Klinkenhebel 2.3 befindet sich in "Wartestellung, die ihm zugeordnete Zwischenklinke 14.3 in Ruhestellung.

Die Klinkenhebel 2.4 bis 2.6 befinden sich zusammen mit den ihnen zugeordneten Zwischenklinken 14.4 und 14.5 in Ruhestellung.

Die Bewegung der Klinkenhebel und der Zwischenklinke erfolgt voneinander abhängig. Im Augenblick befindet sich der Klinkenhebel 2.3 in Bereitschaftsstellung zur Aufnahme eines zu lagernden Lagergutes. Wird dieses zwischen bevorzugt vier in einem Rechteck zueinander angeordneten Stapelsäulen eingelegt, so drückt es auf den Tragarm 3.3 des Klinkenhebels 2.3. Dies bewirkt, dass sich dieser Klinkenhebel 2.3 um die Drehachse 6.3 dreht, bis sein Steuerarm 4.3 mit einer nicht näher gezeigten Nase 20 an einem Anschlag 21.3 anschlägt. Diese Tragstellung ist für die Klinkenhebel 2.1 und 2.2 dargestellt.

Während dieser Drehung um die Drehachse 6.3 hat der Klinkenhebel 2.3 zwei Funktionen erfüllt. Zum einen drückt eine obere Steuerkante 22.3 des Steuerarms 4.3 auf den Bolzen 7.4 des nachfolgenden Klinkenhebels 2.4, so dass dieser entlang der oberen Steuerkante 22 gleitet und sich dann in einer Position befindet, wie dies für den Bolzen 7.3 des Klinkenhebels 2.3 angedeutet ist. Hierdurch wird der Klinkenhebel 2.4 in Bereitschaftsstellung geschwenkt.

An dem Bolzen 7.4 befindet sich auch der Verbindungsstreifen 8.3 zu der Zwischenklinke 14.3, die ebenfalls um die Drehachse 6.3 dreht. Durch die Bewegung des Bolzens 7.4 gelangt diese Zwischenklinke 14.3 in Bereitschaftsstellung, wie dies für die Zwischenklinke 14.2 gezeigt ist.

Die Zwischenklinke 14.2 wiederum, welche über den Verbindungsstreifen 8.2 mit dem Bolzen 7.3 des Klinkenhebels 2.3 verbunden ist, gelangt durch dessen Drehung in eine Arbeitsstellung, wie sie für die Zwischenklinke 14.1 angedeutet ist. In dieser Arbeitsstellung nehmen die Zwischenklinke 14.1 und der Tragarm 3.1 ein nicht näher gezeigtes Lagergut zwischen sich auf und halten es.

Beim Entnehmen der Lagergüter ist der Vorgang der Klinkenhebel- und Zwischenklinkenbewegung entsprechend umgekehrt. Dabei gewährleistet das Langloch 9 in den Verbindungsstreifen 8, dass der vorangehende Klinkenhebel bereits eine Bewegung zumindest in die Bereitschaftsstellung vollziehen kann, ohne dass die darunterliegende Zwischenklinke vom Lagergut abgehoben wird.

## Patentansprüche

1. Stapelsäule zum Lagern von Lagergütern, insbesondere von Karosserieteilen auf Tragarmen (3) von Klinkenhebeln (2), die um eine Drehachse (6) von einer Ruhestellung in eine Arbetisstellung drehen, wobei mehrere Klinkenhebel (2.1-2.6) übereinander oder nebeneinander angeordnet sind und in Wirkverbindung stehen,
dadurch gekennzeichnet,
dass zwischen zwei benachbarten Klinkenhebeln (2.1-2.6) eine Zwischenklinke (14.1-14.5) vorgesehen ist, welche nach einem Auf- oder Anlagen des Lagergutes auf oder an den einen Klinkenhebel (2.2) durch die Schwenkbewegung des anderen Klinkenhebels (2.3) auf oder an das Lagergut andererseits des einen Klinkenhebels (2.2) auf- oder anlegbar ist.

2. Stapelsäule nach Anspruch 1, dadurch gekennzeichnet, dass am Tragarm (3) des vorangehenden Klinkenhebels ein Steuerarm (4) angeordnet ist, der eine obere Steuerkante (22) für einen Bolzen (7) für den nachfolgenden Klinkenhebel ausbildet, wobei der Bolzen (7) bei der Drehbewegung des vorangehenden Klinkenhebels in eine Arbeitsstellung entlang der Steuerkante (22) gleitet und den nachfolgenden Klinkenhebel in eine Bereitschaftsstellung bringt.

3. Stapelsäule nach Anspruch 1, dadurch gekennzeichnet, daß die Zwischenklinke (14) drehbar um eine Drehachse (6) an der Stapelsäule (R) angeordnet ist.

4. Stapelsäule nach Anspruch 3, dadurch gekennzeichnet, daß Klinkenhebel (2) und Zwischenklinke (14) eine gemeinsame Drehachse (6) aufweisen.

5. Stapelsäule nach Anspruch 3 oder 4, dadurch gekennzeichnet, daß die Drehachse (6) bzw. eine auf die Drehachse (6) aufsetzbare Hülse (19) der Zwischenklinke (14) zwischen einem Ende (28), welches dem Lagergut auf- bzw. anliegt, und einem anderen Ende angeordnet ist, welches gelenkig mit einem Steuerarm (4) des nachfolgenden Klinkenhebels verbunden ist.

6. Stapelsäule nach Anspruch 5, dadurch gekennzeichnet, daß die Verbindung zwischen dem Steuerarm (4) des nachfolgenden Klinkenhebels (2) und der Zwischenklinke (14) über einen Verbindungsstreifen (8) erfolgt.

7. Stapelsäule nach Anspruch 6, dadurch gekennzeichnet, daß der Verbindungsstreifen (8) einends in einen Haken (15) an der Zwischenklinke (14) eingehängt ist.

8. Stapelsäule nach Anspruch 6 oder 7, dadurch gekennzeichnet, daß der Verbindungsstreifen (8) anderenends ein Langloch (9) aufweist, in dem ein Bolzen (7) an dem Steuerarm (4) des nachfolgenden Klinkenhebels gleitet.

9. Stapelsäule nach wenigstens einem der Ansprüche 2 - 8, dadurch gekennzeichnet, daß der Bolzen (7), welcher in das Langloch (9) des Verbindungsstreifens (8) eingreift, vor der Arbeitsstellung des einen Klinkenhebels mit dessen Steuerarm (4) zusammenwirkt, um den nachfolgenden Klinkenhebel von der Ruhestellung in eine Wartestellung zu bringen.

10. Stapelsäule nach Anspruch 8 oder 9, dadurch gekennzeichnet, daß der Verbindungsstreifen (8) auf dem Bolzen (7) durch Sicherungsringe lösbar festgelegt ist.

## Claims

1. Stacking column for storing articles to be stored, more especially vehicle body parts, on carrying arms (3) of ratchet levers (2) which rotate about a rotary axle (6) from an inoperative position into an operative position, a plurality of ratchet levers (2.1-2.6) being disposed above one another or adjacent one another and being in operative connection with one another, characterised in that an intermediate ratchet (14.1-14.5) is provided between two adjacent ratchet levers (2.1-2.6) and, after the article to be stored has been mounted on or attached to one ratchet lever (2.2), said intermediate lever is mountable on or attachable to the article to be stored on the other end of the one ratchet lever (2.2) by the pivotal movement of the other ratchet lever (2.3).

2. Stacking column according to claim 1, characterised in that a control arm (4) is disposed on the carrying arm (3) of the preceding ratchet lever and forms an upper control edge (22) for a pin (7) for the subsequent ratchet lever, the pin (7) sliding along the control edge (22) during the rotary movement of the preceding ratchet lever into an operative position and bringing the subsequent ratchet lever into a standby position.

3. Stacking column according to claim 1, characterised in that the intermediate ratchet (14) is disposed on the stacking column (R) so as to be rotatable about a rotary axle (6).

4. Stacking column according to claim 3, characterised in that ratchet lever (2) and intermediate ratchet (14) have a common rotary axle (6).

5. Stacking column according to claim 3 or 4, characterised in that the rotary axle (6), or respectively a sleeve (19) of the intermediate ratchet (14), which sleeve is mountable on the rotary axle (6), is disposed between one end (28), which lies on or respectively abuts against the article to be stored, and another end which is pivotally connected to a control arm (4) of the subsequent ratchet lever.

6. Stacking column according to claim 5, characterised in that the connection between the control arm (4) of the subsequent ratchet lever (2) and the intermediate ratchet (14) is effected via a connecting strip (8).

7. Stacking column according to claim 6, characterised in that, at one end, the connecting strip (8) is fitted into a hook (15) on the intermediate ratchet (14).

8. Stacking column according to claim 6 or 7, characterised in that the connecting strip (8) has, at the other end, an elongate slot (9) in which a pin (7) slides on the control arm (4) of the subsequent ratchet lever.

9. Stacking column according to at least one of claims 2 - 8, characterised in that the pin (7), which engages in the elongate slot (9) of the connecting strip (8), co-operates with the control arm (4) of one ratchet lever before the operative position of said one lever in order to bring the subsequent ratchet lever from the inoperative position into a waiting position.

10. Stacking column according to claim 8 or 9, characterised in that the connecting strip (8) is detachably secured on the pin (7) by means of securing rings.

## Revendications

1. Colonne-râtelier pour le stockage de produits, en particulier d'éléments de carrosserie, sur des bras-supports (3) de leviers à cliquet (2), qui peuvent être amenés par rotation autour d'un axe de rotation (6) d'une position de repos dans une position de travail, plusieurs leviers à cliquet (2.1-2.6) étant disposés l'un au dessus de l'autre ou l'un à côté de l'autre et une liaison active étant placée entre eux, caractérisée en ce qu'il est prévu, entre deux leviers à cliquet consécutifs (2.1-2.6), un cliquet intermédiaire (14.1-14.5) qui, une fois le produit à stocker posé ou appuyé sur ou contre l'un des leviers à cliquet (2.2), par le pivotement de l'autre levier à cliquet (2.3) sur ou contre le produit à stocker, est appliqué sur ou contre le premier levier à cliquet (2.2).

2. Colonne-râtelier selon la revendication 1, caractérisée en ce qu'un bras de commande (4) est monté sur le bras-support (3) du levier à cliquet précédent, lequel bras de commande forme un bord de commande (22) supérieur pour un axe (7) du levier à cliquet suivant, l'axe (7), lors du pivotement du levier à cliquet précédent dans une position de travail, glissant le long du bord de commande (22) et amenant le levier à cliquet suivant dans une position d'attente.

3. Colonne-râtelier selon la revendication 1, caractérisée en ce que le cliquet intermédiaire (14) est monté tournant autour d'un axe de rotation (6) sur la colonne-râtelier (R).

4. Colonne-râtelier selon la revendication 3, caractérisée en ce que le levier à cliquet (2) et le cliquet intermédiaire (14) ont un axe de rotation (6) commun.

5. Colonne-râtelier selon la revendication 3 ou 4, caractérisée en ce que l'axe de rotation (6) ou une douille (19) du cliquet intermédiaire (14) montée sur l'axe (6) est disposé entre une extrémité (28), sur ou contre laquelle le produit à stocker est posé ou appuyé, et une autre extrémité qui est liée de manière articulée à un bras de commande (4) du levier à cliquet suivant.

6. Colonne-râtelier selon la revendication 5, caractérisée en ce que la liaison entre le bras de commande (4) du levier à cliquet (2) suivant et le cliquet intermédiaire est réalisée au moyen d'une barrette de liaison (8).

7. Colonne-râtelier selon la revendication 6, caractérisée en ce que la barrette de liaison (8), à une extrémité, est accrochée à un crochet (15) sur le cliquet intermédiaire (14).

8. Colonne-râtelier selon la revendication 6 ou 7, caractérisée en ce que la barrette de liaison (8), à son autre extrémité, comporte un trou oblong (9) dans lequel coulisse un axe (7) du bras de commande (4) du levier à cliquet suivant.

9. Colonne-râtelier selon au moins une des revendications 2 - 8, caractérisée en ce que l'axe (7) qui pénètre dans le trou oblong (9) de la barrette de liaison (8), avant la position de travail de l'un des leviers à cliquet, coopère avec le bras de commande (4) de celui-ci aux fins d'amener le levier à cliquet suivant de la position de repos dans une position d'attente.

10. Colonne-râtelier selon la revendication 8 ou 9, caractérisée en ce que la barrette de liaison (8) est fixée de manière séparable à l'axe (7) au moyen de circlips.
